# EUROPÄISCHE PATENTANMELDUNG

(11) **EP 4 714 253 A1**
(43) Veröffentlichungstag der Anmeldung: **25.03.2026**
(21) Anmeldenummer: 25193650.6
(22) Anmeldetag: 04.08.2025
(51) Int. Cl.: A01D 41/14, A01D 69/03

(54) **SELBSTFAHRENDE ERNTEMASCHINE**

(30) Priorität: 23.09.2024 DE 102024127351
(71) Anmelder: CLAAS Selbstfahrende Erntemaschinen GmbH, 33428 Harsewinkel (DE)
(72) Erfinder: Gehrmann, Marcus, 33428 Marienfeld (DE); Herter, Felix, 88239 Wangen (DE); Nordhoff, Hendrik, 48727 Billerbeck (DE); Schwaer, Christian, 48231 Warendorf (DE); Eidhoff, Lukas, 33378 Rheda-Wiedenbrück (DE); Vatheuer, Nils, 66123 Saarbrücken (DE); Mutzke, Erik, 33330 Gütersloh (DE); Driftschröer, Peter, 33442 Herzebrock-Cöarholz (DE)
(74) Vertreter: CLAAS Gruppe

(57) **Zusammenfassung**

Die Erfindung betrifft eine selbstfahrende Erntemaschine (1) mit einem Vorsatzgerät (3) zur Aufnahme von Pflanzen umfassend einen ersten hydraulisches Kreislauf (32), der zumindest einen an dem Vorsatzgerät (3) angeordneten ersten Hydraulikmotor (34) zum Antreiben eines Arbeitsaggregats (31) umfasst und eine an der Erntemaschine (1) angeordnete erste Hydraulikpumpe (33), wobei die erste Hydraulikpumpe (33) und der erste Hydraulikmotor (34) mit einer Versorgungsleitung (35) und einer Rückführleitung (36) miteinander verbunden sind, wobei das Vorsatzgerät (3) zumindest eine erste Hydrauliksystemkomponente (51) umfasst, die zum Zuführen eines Spülölvolumenstroms (53) von dem ersten hydraulischen Kreislauf (32) zu der ersten Hydrauliksystemkomponente (51) mittels einer Bypassleitung (52) mit der Rückführleitung (36) gekoppelt ist.

## Beschreibung

Die Erfindung betrifft eine selbstfahrende Erntemaschine mit einem Vorsatzgerät gemäß dem Oberbegriff des Anspruchs 1.

Die selbstfahrende Erntemaschine kann als Mähdrescher oder als Feldhäcksler ausgebildet sein, wobei das an der Erntemaschine angeordnete Vorsatzgerät dazu vorgesehen und eingerichtet ist Pflanzen von einem Feld aufzunehmen.

Als Mähdrescher ausgeführte selbstfahrende Erntemaschinen der vorstehend beschrieben Art sind im Stand der Technik bereits bekannt. Hierzu wird beispielhaft auf die EP 4 335 281 A1 hingewiesen. Die EP 4 335 281 A1 offenbart eine landwirtschaftliche Erntemaschine, die ein Vorsatzgerät zur Aufnahme von Pflanzen von einem Feld umfasst. Die EP 4 335 281 A1 ist auf ein Hydrauliksystem gerichtet, dass eine an der Erntemaschine befindliche Hydraulikpumpe umfasst. Die Hydraulikpumpe ist über eine Versorgungsleitung mit einer an dem Vorsatzgerät angeordneten Hydrauliksystemkomponente verbunden. Stromabwärts der Hydrauliksystemkomponente umfasst das Vorsatzgerät einen Hydraulikflüssigkeitskühler. Nachdem die Hydraulikflüssigkeit den Hydraulikflüssigkeitskühler durchlaufen hat, wird diese über eine Rücklaufleitung zurück zu der Erntemaschine geleitet und dort einem Reservoir zugeführt.

Im Stand der Technik hat es sich als nachteilig herausgestellt, dass am Vorsatzgerät angeordnete Kühler, insbesondere einen Lüfter umfassende Kühler, aufgrund des im Erntebetrieb am Vorsatzgerät aufgewirbelten Staubs besonders anfällig für Verschmutzungen und Ablagerungen sind, die die Funktion des Kühlers negativ beeinträchtigen. Darüber hinaus nimmt mit zunehmender Arbeitsbreite der Vorsatzgeräte die erforderliche Kühlleistung des Kühlers zu, sodass sich auch ein zusätzlich Bauraumbedarf und zunehmendes Gewicht für die am Vorsatzgerät angeordneten Kühler ergibt.

Es ist deshalb Aufgabe der Erfindung, die beschriebenen Nachteile des Standes der Technik zu vermeiden und insbesondere einen Mähdrescher mit einem Vorsatzgerät zu schaffen, der eine verbesserte Abführung der thermischen Energie der Hydrauliksystemkomponenten eines Vorsatzgeräts ermöglicht.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird eine selbstfahrende Erntemaschine mit einem Vorsatzgerät zur Aufnahme von Pflanzen vorgeschlagen, umfassend einen ersten hydraulisches Kreislauf, der zumindest einen an dem Vorsatzgerät angeordneten ersten Hydraulikmotor zum Antreiben eines Arbeitsaggregats umfasst und eine an der Erntemaschine angeordnete erste Hydraulikpumpe, wobei die erste Hydraulikpumpe und der erste Hydraulikmotor mit einer Versorgungsleitung und einer Rückführleitung miteinander verbunden sind, wobei das Vorsatzgerät zumindest eine erste Hydrauliksystemkomponente umfasst, die zum Zuführen eines Spülölvolumenstroms von dem ersten hydraulischen Kreislauf zu der ersten Hydrauliksystemkomponente mittels einer Bypassleitung mit der Rückführleitung gekoppelt ist.

Dadurch, dass die erste Hydraulikpumpe an der Erntemaschine angeordnet ist und Hydraulikflüssigkeit, insbesondere Öl, von der Erntemaschine zu einem an dem Vorsatzgerät angeordneten Hydraulikmotor fördert, ist mittels der Bypassleitung aus einem von der Erntemaschine mit Öl gespeisten ersten Hydraulikkreislauf der Spülölvolumenstrom abführbar. Dies hat den besonderen Vorteil, dass die von der Erntemaschine dem Vorsatzgerät zugeführte Hydraulikflüssigkeit als Spülölvolumenstrom verwendbar ist. Im bestimmungsgemäßen Betriebszustand der Erntemaschine weist der erste Hydraulikkreislauf und somit auch der Spülölvolumenstrom in der Regel eine niedrigere Temperatur auf als die am Vorsatzgerät befindlichen weiteren Hydrauliksystemkomponenten. Mithin bewirkt das Zuführen des Spülölvolumenstroms aus dem ersten hydraulischen Kreislauf zu den Hydrauliksystemkomponenten eine Kühlung der an dem Vorsatzgerät angeordneten Hydrauliksystemkomponenten, sodass kein zusätzlicher Kühler an dem Vorsatzgerät erforderlich ist. Die Rückführleitung ist dazu vorgesehen und eingerichtet, Hydraulikflüssigkeit von dem ersten Hydraulikmotor zu der ersten Hydraulikpumpe zurückzuführen und weist somit gegenüber der Versorgungsleitung einen niedrigeren Druck auf. Dies ist insofern vorteilhaft, dass der aus der Rückführleitung abgeleitete Spülölvolumenstrom stromaufwärts der Hydrauliksystemkomponenten eine geringerer Drosselung bedarf.

Eine vorteilhafte Weiterbildung sieht vor, dass die Erntemaschine einen Tank umfasst, wobei die erste Hydrauliksystemkomponente zum Zuführen des Spülölvolumenstroms zu dem Tank an einem Auslass mit einer zu dem Tank führenden Tankleitung verbunden ist. Mittels der Tankleitung kann der Spülölvolumenstrom zurück zu der Erntemaschine geführt werden.

Um einen unkontrollierten Druckverlust der ersten Hydrauliksystemkomponente zu vermeiden, kann in die Tankleitung ein Ausspülkontrollelement zur Begrenzung des dem Tank zuzuführenden Spülölvolumenstroms integriert sein, wobei vorzugsweise das Ausspülkontrollelement als eine Blende oder ein Proportionalventil ausgeführt ist.

Gemäß einer vorteilhaften Ausgestaltung kann die Bypassleitung ein Druckkontrollelement umfassen, wobei das Druckkontrollelement vorzugsweise als ein Wegeventil mit zumindest zwei Schaltstellungen ausgeführt ist, wobei vorzugsweise in einer ersten Schaltstellung des Wegeventils eine Drossel eine Druckminderung bewirkt und in einer zweiten Schaltstellung des Wegeventils die Bypassleitung gesperrt ist. Insofern der erste Hydraulikkreislauf zum Reversieren eines trieblich mit dem ersten Hydraulikmotor verbundenen Arbeitsaggregats in entgegengesetzter Richtung betrieben wird, verhindert das Druckkontrollelement in seiner zweiten Schaltstellung, dass aus der Bypassleitung ein dem ersten Hydraulikmotor zuzuführende Volumenstrom abgeleitet wird.

Gemäß einer weiteren vorteilhaften Ausgestaltung kann das Vorsatzgerät eine zweite Hydrauliksystemkomponente umfassen, die zum Zuführen zumindest eines Teilstroms des Spülölvolumenstroms von dem ersten hydraulischen Kreislauf zu der zweiten Hydrauliksystemkomponente mittels der Bypassleitung mit der Rückführleitung gekoppelt ist. Mithin kann der Spülölvolumenstrom zum Kühlen mehrerer Hydrauliksystemkomponenten verwendet werden.

Besonders vorteilhaft ist es, wenn die zweite Hydrauliksystemkomponente an einem Auslass mit der Tankleitung, insbesondere mit dem Ausspülkontrollelement gekoppelt ist.

Um den Hydrauliksystemkomponenten jeweils eine definierte Teilmenge des Spülölvolumenstroms zuzuführen, ist es besonders vorteilhaft, wenn die Bypassleitung einen Mengenteiler umfasst, der dazu vorgesehen und eingerichtet ist den Spülölvolumenstrom in zumindest zwei Teilströme aufzuteilen und zumindest zwei separaten Leitungen zuzuführen, wobei die erste Leitung mit der ersten Hydrauliksystemkomponente verbunden ist und die zweite Leitung mit der zweiten Hydrauliksystemkomponente verbunden ist.

Gemäß einer vorteilhaften Weiterbildung kann die erste Hydrauliksystemkomponente als ein erster Wärmetauscher ausgebildet sein und/oder die zweite Hydrauliksystemkomponenten als ein zweiter Wärmetauscher ausgebildet sein, sodass dem Spülölvolumenstrom von der jeweiligen Hydrauliksystemkomponente besonders wirksam thermische Energie zugeführt werden kann.

Gemäß einer weiteren vorteilhaften Weiterbildung kann das Vorsatzgerät zumindest ein Getriebe mit in dem Getriebe befindlichen Getriebeöl umfassen, wobei der erste und/oder der zweite Wärmetauscher zum Kühlen des Getriebeöls mit dem Getriebe gekoppelt ist.

Eine vorteilhafte Ausgestaltung sieht vor, dass die erste Hydrauliksystemkomponente einen zweiten hydraulischen Kreislauf umfasst, wobei der zweite hydraulische Kreislauf zumindest einen zweiten Hydraulikmotor und eine zweite Hydraulikpumpe umfasst, die mittels Leitungen miteinander verbunden sind, wobei vorzugsweise der zweite Hydraulikmotor trieblich mit einem Erntegutförderorgan oder einem Schneidorgan verbunden ist. Gemäß dieser vorteilhaften Ausgestaltung kann der üblicherweise geschlossene erste hydraulische Kreislauf zum Kühlen des üblicherweise geschlossenen zweiten hydraulischen Kreislaufs verwendet werden, indem diesen der Spülölvolumenstrom zugeführt wird.

Um den Spülölvolumenstrom der ersten Hydrauliksystemkomponenten zuzuführen kann die Bypassleitung mit einem Gehäuse des zweiten Hydraulikmotors und/oder einem Gehäuse der zweiten Hydraulikpumpe und/oder zumindest einer der den zweiten Hydraulikmotor und die zweite Hydraulikpumpe verbindenden Leitungen gekoppelt sein.

Eine vorteilhafte Ausgestaltung sieht vor, dass die zweite Hydrauliksystemkomponente einen dritten hydraulischen Kreislauf umfasst, wobei der dritte hydraulische Kreislauf zumindest einen dritten Hydraulikmotor und eine dritte Hydraulikpumpe umfasst, die mittels Leitungen miteinander verbunden sind, wobei vorzugsweise der dritte Hydraulikmotor trieblich mit einem Erntegutförderorgan oder einem Schneidorgan verbunden ist. Gemäß dieser vorteilhaften Ausgestaltung kann der üblicherweise geschlossene erste hydraulische Kreislauf zusätzlich zum Kühlen des üblicherweise geschlossenen dritten hydraulischen Kreislaufs verwendet werden, indem diesen der Spülölvolumenstrom zugeführt wird.

Um den Spülölvolumenstrom der zweiten Hydrauliksystemkomponenten zuzuführen kann die Bypassleitung mit einem Gehäuse des dritten Hydraulikmotors und/oder einem Gehäuse der dritten Hydraulikpumpe und/oder zumindest einer der den dritten Hydraulikmotor und die dritte Hydraulikpumpe verbindenden Leitungen gekoppelt sein.

Zur Kühlung des Spülölvolumenstroms stromabwärts der Hydrauliksystemkomponenten kann die Erntemaschine einen Kühler umfassen, wobei der Kühler an die Tankleitung angeschlossen ist und zum Kühlen des dem Tank zuzuführenden Spülölvolumenstroms vorgesehen und eingerichtet ist.

Eine besonders bevorzugte Ausgestaltung sieht vor, dass das Vorsatzgerät eine Haspel umfasst, wobei der erste Hydraulikmotor trieblich mit der Haspel verbunden ist. Die hierbei zum Antreiben der Haspel vorgesehen erste Hydraulikpumpe ist derart ausgebildet, sodass dessen Förderleistung den Bedarf des trieblich mit der Haspel verbundenen ersten Hydraulikmotors in der Regel übersteigt. Mithin kann problemlos der Spülölvolumenstrom aus dem derart ausgebildeten ersten hydraulischen Kreislauf abgeleitet werden. Ferner weist der erste hydraulische Kreislauf zum Antreiben der Haspel gegenüber den weiteren Hydrauliksystemkomponenten ein niedriges Temperaturniveau auf.

Die vorliegende Erfindung wird nachstehend anhand eines in den Zeichnungen dargestellten Ausführungsbeispiels näher erläutert. Es zeigen:
- Figur 1: eine schematische und exemplarische Darstellung eines selbstfahrenden Mähdreschers in Seitenansicht;
- Figur 2: schematisch und exemplarisch eine erste Ausgestaltungsvariante des erfindungsgemäßen Hydrauliksystems;
- Figur 3: schematisch und exemplarisch eine zweite Ausgestaltungsvariante des erfindungsgemäßen Hydrauliksystems;
- Figur 4: schematisch und exemplarisch eine dritte Ausgestaltungsvariante des erfindungsgemäßen Hydrauliksystems.

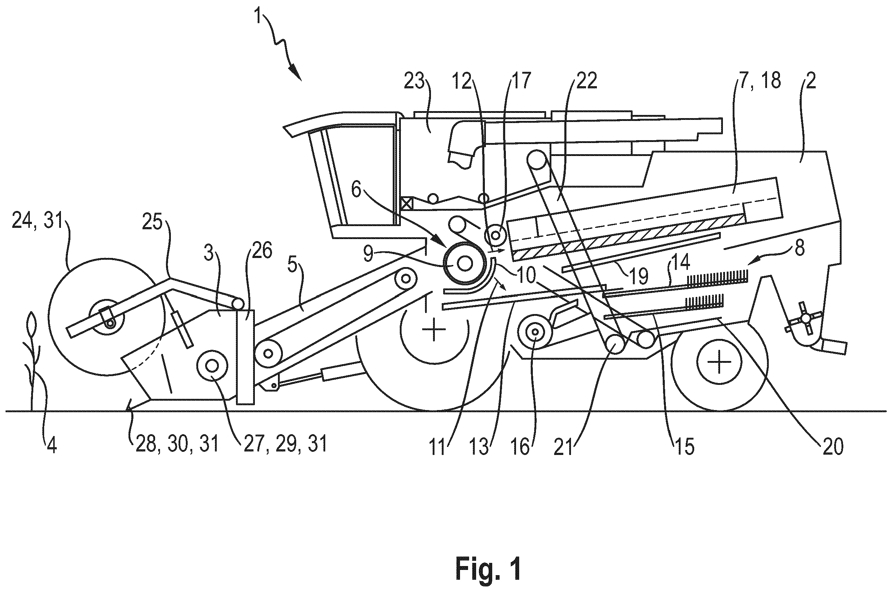

Fig. 1 zeigt eine schematische Darstellung einer als Mähdrescher 1 ausgebildeten selbstfahrenden Erntemaschine 1 in Seitenansicht. Der Mähdrescher 1 weist ein mit einem Fahrwerk verbundenes Traggestell auf, auf dem ein mehrteiliges Maschinengehäuse 2 befestigt ist. Der Mähdrescher 1 nimmt mit einem Vorsatzgerät 3 in an sich bekannter Weise Erntegut 4 von einem Feld auf.

Das aufgenommene Erntegut 4 wird über einen Schrägförderer 5 einer Dresch- und Trenneinrichtung übergeben. Die Dresch- und Trenneinrichtung umfasst eine nach dem Tangentialflussprinzip arbeitende Dreschvorrichtung 6, eine der Dreschvorrichtung 6 nachgeordnete Abscheideeinrichtung 7 und eine Siebanordnung 8 als Teil einer Reinigungsvorrichtung des Mähdreschers 1.

In der Dreschvorrichtung 6 wird das Erntegut 4 zwischen zumindest einer Dreschtrommel 9 und einem diese wenigstens teilweise ummantelnden Dreschkorb 10 hindurchgeführt und in zumindest zwei Teilströme 11, 12 getrennt. Der erste Teilstrom 11 besteht im Wesentlichen aus Körnern, Kurzstroh und Spreu und wird über einen Vorbereitungsboden 13 der aus einem Obersieb 14 und einem Untersieb 15 bestehenden Siebanordnung 8 zugeführt. Ein Reinigungsgebläse 16 generiert einen Luftstrom, welcher die Siebe 14, 15 durchsetzt.

Der im rückwärtigen Bereich der Dreschvorrichtung 6 aus diesem austretende weitere, im Wesentlichen aus Halmgut, insbesondere Stroh und einem Restkornanteil, bestehende zweite Teilstrom 12 wird mittels einer Zuführtrommel 17 zu der als Axialrotor ausgeführten Abscheideeinrichtung 7 geleitet. In einer alternativen Ausführungsform kann die Abscheideeinrichtung 7 auch als Hordenschüttleranordnung ausgeführt sein. Ein im Wesentlichen aus einem Gemisch aus Körnern und Ährenbruchstücken sowie Kurzstroh bestehender Erntegutstrom wird von der Abscheideeinrichtung 7 abgeschieden und über einen sogenannten Rücklaufboden 19 und den Vorbereitungsboden 13 an die Siebanordnung 8 übergeben.

In der Siebanordnung 8 wird schließlich in an sich bekannter Weise ein gereinigter Körnerstrom 18 abgeschieden und über einen Auffang- und Führungsboden 20 einer Kornförderschnecke 21 zugeführt, von wo aus er mittels eines Elevators 22 in den Korntank 23 gefördert wird.

Das Vorsatzgerät 3 umfasst zumindest eine an sich bekannte Haspel 24, die über Arme 25 an dem Rahmen 26 des Vorsatzgeräts 3 gehaltert ist. Neben der Haspel 24 weist das Vorsatzgerät 3 weitere Arbeitsaggregate 31 auf, die zumindest ein Erntegutförderorgan 27 und ein Schneidorgan 28 umfassen. Hier und vorzugsweise ist das Erntegutförderorgan 27 als eine Querförderschnecke 29 ausgebildet. Zusätzlich oder alternativ kann das Erntegutförderorgan 27 aber auch eine hier nicht näher dargestellte Förderbandeinrichtung umfassen. Das Schneidorgan 28 ist in der in Fig. 1 dargestellten Ausführungsform als ein Messerbalken 30 ausgebildet. Zusätzlich oder alternativ kann das Schneidorgan 28 auch als ein hier nicht näher dargestelltes und an sich bekanntes Seitenschneidwerk zum Schneiden von Raps und/oder als eine Pflückeinheit zum Ernten von Mais ausgebildet sein.

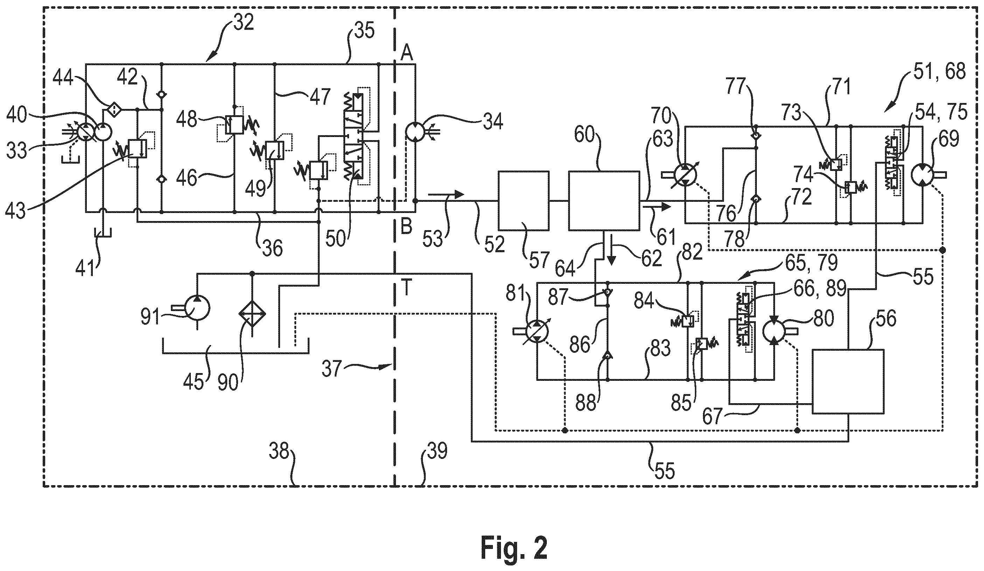

In Fig. 2 ist ein erster hydraulischer Kreislauf 32 zum Antreiben des als Haspel 24 ausgebildeten Arbeitsaggregats 31 dargestellt. Der erste hydraulische Kreislauf 32 umfasst eine an der Erntemaschine 1 angeordnete erste Hydraulikpumpe 33 die mit einem an dem Vorsatzgerät 3 angeordneten ersten Hydraulikmotor 34 zusammenwirkt. Der erste Hydraulikmotor 34 ist trieblich mit der Haspel 24 verbunden. Die erste Hydraulikpumpe 33 und der erste Hydraulikmotor 34 sind mittels einer Versorgungsleitung 35 und einer Rückführleitung 36 miteinander verbunden, wobei die Leitungen 35, 36 jeweils von der ersten Hydraulikpumpe 33 zu dem ersten Hydraulikmotor 34 führen. Bei einem Betrieb der Haspel 24 in ihrer Hauptantriebsrichtung bildet die Versorgungsleitung 35 die Hochdruckleitung und die Rückführleitung 36 die Niederdruckleitung aus. Im Betriebszustand der Haspel 24 wird die von der ersten Hydraulikpumpe 33 geförderte Hydraulikflüssigkeit über die Versorgungsleitung 35 hin zu dem ersten Hydraulikmotor 34 geleitet und mittels der Rückführleitung 36 von dem ersten Hydraulikmotor 34 zurück zu der ersten Hydraulikpumpe 33 geführt. Mithin ergibt sich ein erster hydraulischer Kreislauf 32, in dem Hydraulikflüssigkeit umläuft.

Die Versorgungsleitung 35 und die Rückführleitung 36 weisen jeweils einen vorsatzgerätseitigen Teil und einen erntemaschinenseitigen Teil auf, die mittels einer in Fig. 5 schematisch dargestellten Schnellkupplung 37 lösbar miteinander verbunden sind. Das gestrichelt dargestellte Rechteck mit dem Bezugszeichen 38 kennzeichnet die an der Erntemaschine 1 angeordneten Komponenten bzw. Teile und das gestrichelt dargestellte Rechteck mit dem Bezugszeichen 39 kennzeichnet die an dem Vorsatzgerät 3 angeordneten Komponenten bzw. Teile. Die gemeinsame Seite der Rechtecke 38, 39, stellt in den Fig. 2 bis 3 die Schnellkupplung 37 schematisch dar.

Hier und vorzugsweise umfasst der erste hydraulische Kreislauf 32 eine Füllpumpe 40, mittels derer dem ersten hydraulischen Kreislauf 32 aus einem Reservoir 41 Hydraulikflüssigkeit zuführbar ist. In eine Leitung 42, die von der Füllpumpe 40 zu den hydraulischen Kreislauf 32 führt, ist in der dargestellten Ausführungsform ein Filter 44 integriert. Weiterhin ist der Leitung 42 ein Druckbegrenzungsventil 43 zugeordnet, das ein Abführen von Hydraulikflüssigkeit aus der Leitung 42 zu einem Tank 45 ermöglicht. Hier und vorzugsweise sind die Versorgungsleitung 35 und die Rückführleitung 36 jeweils mittels zweier weitere Leitungen 46, 47 miteinander verbunden, in die jeweils ein Druckbegrenzungsventil 48, 49 zur Vermeidung eines Überdrucks in der Versorgungsleitung 35 und der Rückführleitung 36 integriert ist. Weiterhin stehen die Versorgungsleitung 35 und die Rückführleitung 36 mit einem Spülventil 50 in Verbindung, mittels dessen in Abhängigkeit von der Schaltstellung des Spülventils 50 aus der Rückführleitung 36 oder der Versorgungsleitung 39 Hydraulikflüssigkeit unmittelbar dem Tank 45 zuführbar ist.

Das Vorsatzgerät 3 umfasst eine erste Hydrauliksystemkomponente 51, die über eine Bypassleitung 52 mit der Rückführleitung 36 des ersten hydraulischen Kreislaufs 32 gekoppelt ist. Die Bypassleitung 52 ist dazu vorgesehen und eingerichtet einen Spülölvolumenstrom 53, der aus der in dem ersten hydraulischen Kreislauf 32 umlaufenden Hydraulikflüssigkeit entnommen ist, der ersten Hydrauliksystemkomponente 51 zuzuführen. Mittels einer an einem Auslass 54 der ersten Hydrauliksystemkomponente 51 angeschlossenen Tankleitung 55 ist der Spülölvolumenstrom 53 ausgehend von der ersten Hydrauliksystemkomponente 51 dem an der Erntemaschine 1 angeordneten Tank 45 zuführbar. Hierbei wird der aus dem ersten hydraulischen Kreislauf 32 abgezweigte Spülölvolumenstrom 53 zum Kühlen der ersten Hydrauliksystemkomponenten 51 verwendet. Insbesondere nutzt die Verwendung des Spülölvolumenstroms 53 zur Kühlung der ersten Hydrauliksystemkomponente 51 die Förderleistung der ersten Hydraulikpumpe 33, die einen Hydraulikvolumenstrom bereitstellt, der den Bedarf des ersten Hydraulikmotors 34 zum Antreiben der Haspel 24 übersteigt. Zugleich weist die in dem ersten hydraulischen Kreislauf 32 umlaufende Hydraulikflüssigkeit im Betriebszustand der Erntemaschine 1 eine niedrigere Temperatur auf als die Hydraulikflüssigkeit der ersten Hydrauliksystemkomponente 51.

Um zu vermeiden, dass der Druck der ersten Hydrauliksystemkomponente 51 unkontrolliert abfällt, ist in die Tankleitung 55 ein Ausspülkontrollelement 56 zur Begrenzung des dem Tank 45 zuzuführenden Spülölvolumenstroms 53 integriert. Das Ausspülkontrollelement 56 kann im einfachsten Fall als eine Blende ausgeführt sein. In einer alternativen Ausführung kann das Ausspülkontrollelement 56 als ein Proportionalventil ausgebildet sein. Zusätzlich oder alternativ kann die Erntemaschine 1 einen Kühler 90 umfassen, wobei der Kühler 90 an die Tankleitung 55 angeschlossen ist und zum Kühlen des dem Tank 45 zuzuführenden Spülölvolumenstroms 53 vorgesehen und eingerichtet ist.

Hier und vorzugsweise ist in die Bypassleitung 52 ein Druckkontrollelement 57 integriert, welches dazu vorgesehen und eingerichtet ist, den aus der Rückführleitung 36 herausgeführten Spülölvolumenstrom 53 einzustellen und/oder zu Drosseln. Das Druckkontrollelement 57 ist als ein in Fig. 5 näher dargestelltes Wegeventil mit zumindest zwei Schaltstellungen 58, 59 ausgeführt, wobei in einer ersten Schaltstellung 59 eine Drossel eine Druckminderung des das Druckkontrollelement 57 durchströmenden Spülölvolumenstroms 53 bewirkt und in einer zweiten Schaltstellung 58 die Bypassleitung 52 gesperrt ist.

Gemäß der in den Figuren 2 bis 5 dargestellten Ausführungsform ist stromabwärts des Druckkontrollelements 57 ein Mengenteiler 60 in die Bypassleitung 52 integriert. Der Mengenteiler 60 ist dazu vorgesehen und eingerichtet den Spülölvolumenstrom 53 in zumindest zwei Teilströme 61, 62 aufzuteilen. Die Teilströme 61, 62 werden separaten Leitungen 63, 64 zugeführt, wobei eine Leitung 63 zu der ersten Hydrauliksystemkomponente 51 führt und eine Leitung 64 zu einer zweiten Hydrauliksystemkomponente 65 führt.

Analog zu der ersten Hydrauliksystemkomponente 51 ist die zweite Hydrauliksystemkomponente 65 an dem Vorsatzgerät 3 angeordnet. Die zweite Hydrauliksystemkomponente 65 ist mittels der Leitung 64 mit der Bypassleitung 52 gekoppelt, wobei der zweiten Hydrauliksystemkomponente 65 ein Teilstrom 62 des Spülölvolumenstroms 53 zugeführt wird. Weiterhin umfasst die zweite Hydrauliksystemkomponente 65 einen Auslass 66 der mit der Tankleitung 55 gekoppelt ist. Hierfür führt eine Leitung 67 von dem Auslass 66 zu dem Ausspülkontrollelement 56, wobei mittels des Ausspülkontrollelements 56 der Tankleitung 55 ein aus der zweiten Hydrauliksystemkomponente 65 herausgeführte Volumenstrom zugeführt wird.

In der in Fig. 2 dargestellten Ausführungsform umfasst die erste Hydrauliksystemkomponente 51 einen zweiten hydraulischen Kreislauf 68, der einen zweiten Hydraulikmotor 69 und eine zweite Hydraulikpumpe 70 umfasst. Der zweite Hydraulikmotor 69 und die zweite Hydraulikpumpe 70 sind mittels der Leitungen 71, 72 miteinander gekoppelt, sodass von der zweiten Hydraulikpumpe 70 ein Volumenstrom hin zu dem zweiten Hydraulikmotor 69 durch eine der Leitungen 71, 72 geführt wird und von dem zweiten Hydraulikmotor 69 der Volumenstrom durch eine der Leitungen 71, 72 zurück zu der zweiten Hydraulikpumpe 70 geleitet wird. Der zweite Hydraulikmotor 69 ist in nicht näher dargestellter Weise trieblich mit einem Erntegutförderorgan 27 oder einem Schneidorgan 28 gekoppelt. Die Leitungen 71, 72 sind mittels Druckbegrenzungsventile 73, 74 miteinander verbunden, sodass im Falle eines Überdrucks in einer der Leitungen 71, 72 ein Volumenstrom hin zu der jeweils anderen Leitung 71, 72 geleitet wird. Der Spülölvolumenstrom 53 bzw. der Teilstrom 61 wird dem zweiten hydraulischen Kreislauf 68 über eine Zuführleitung 76 zugeführt. Die Zuführleitung 76 ist endseitig an die Leitungen 71, 72 angeschlossen. Die Leitung 63, mittels der der Teilstrom 61 dem zweiten hydraulischen Kreislauf 68 zugeführt wird, ist an die Zuführleitung 76 angeschlossen, wobei stromabwärts der Leitung 63 jeweils ein Rückschlagventil 77, 78 in die Zuführleitung 76 integriert ist, bevor die Zuführleitung 76 in eine der Leitungen 71, 72 mündet. Weiterhin stehen die Leitungen 71, 72 mit einem Spülventil 75 in Verbindung, das den Auslass 54 des zweiten hydraulischen Kreislaufs 68 bildet und mittels dessen in Abhängigkeit von der Schaltstellung des Spülventils 75 aus einer der Leitungen 71, 72 ein Volumenstrom aus dem zweiten hydraulischen Kreislauf 68 der Tankleitung 55 zuführbar ist.

Analog zu der ersten Hydrauliksystemkomponente 51 umfasst die zweite Hydrauliksystemkomponente 65 in der Ausgestaltung gemäß Fig. 2 einen dritten hydraulischen Kreislauf 79, der einen dritten Hydraulikmotor 80 und eine dritte Hydraulikpumpe 81 umfasst. Der dritte Hydraulikmotor 80 und die dritte Hydraulikpumpe 81 sind mittels der Leitungen 82, 83 miteinander gekoppelt, sodass von der dritten Hydraulikpumpe 81 ein Volumenstrom hin zu dem dritten Hydraulikmotor 80 durch eine der Leitungen 82, 83 geführt wird und von dem dritten Hydraulikmotor 80 der Volumenstrom durch eine der Leitungen 82, 83 zurück zu der dritten Hydraulikpumpe 81 geleitet wird. Der dritte Hydraulikmotor 80 ist in nicht näher dargestellter Weise trieblich mit einem Erntegutförderorgan 27 oder einem Schneidorgan 28 gekoppelt. Die Leitungen 82, 83 sind mittels Druckbegrenzungsventile 84, 85 miteinander verbunden, sodass im Falle eines Überdrucks in einer der Leitungen 82, 83 ein Volumenstrom hin zu der jeweils anderen Leitung 82, 83 geleitet wird. Der Spülölvolumenstrom 53 bzw. der Teilstrom 62 wird dem dritten hydraulischen Kreislauf 79 über eine Zuführleitung 86 zugeführt. Die Zuführleitung 86 ist endseitig an die Leitungen 82, 83 angeschlossen. Die Leitung 64, mittels der der Teilstrom 62 dem dritten hydraulischen Kreislauf 79 zugeführt wird, ist an die Zuführleitung 86 angeschlossen, wobei stromabwärts der Leitung 64 jeweils ein Rückschlagventil 87, 88 in die Zuführleitung 86 integriert ist, bevor die Zuführleitung 86 in eine der Leitungen 82, 83 mündet. Weiterhin stehen die Leitungen 82, 83 mit einem Spülventil 89 in Verbindung, das den Auslass 66 des dritten hydraulischen Kreislaufs 79 bildet und mittels dessen in Abhängigkeit von der Schaltstellung des Spülventils 89 aus einer der Leitungen 82, 83 ein Volumenstrom aus dem dritten hydraulischen Kreislauf 79 der Tankleitung 55 zuführbar ist.

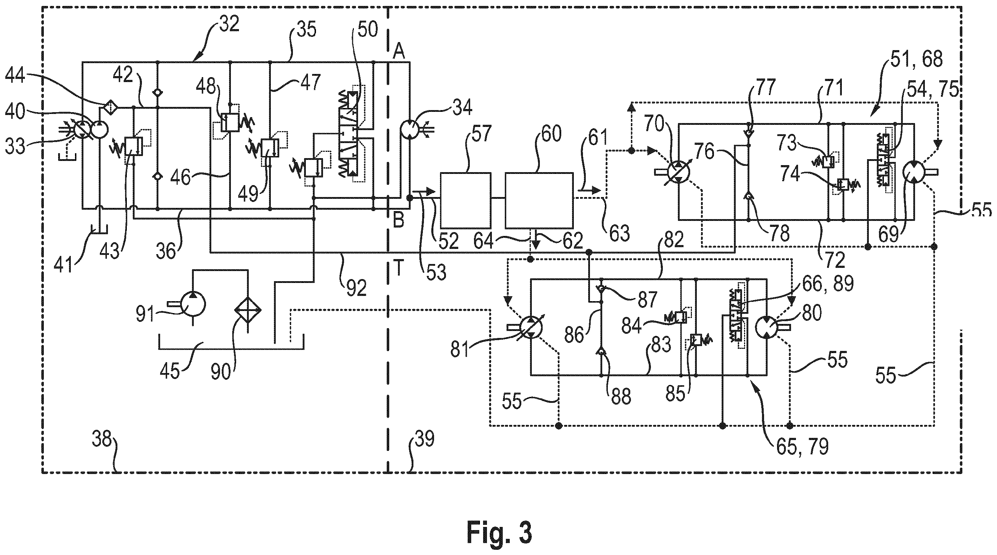

Das in Fig. 3 dargestellte Ausführungsbeispiel unterscheidet sich von dem in Fig. 2 dargestellten Ausführungsbeispiel dadurch, dass der Spülölvolumenstrom 53 einem nicht näher dargestellten Gehäuse der zweiten Hydraulikpumpe 70 und dem Gehäuse des zweiten Hydraulikmotors 69 des zweiten hydraulischen Kreislaufs 68 zugeführt wird. Hierfür ist die Leitung 63, die von dem in der Bypassleitung 52 integrierten Mengenteiler 60 hin zu der ersten Hydrauliksystemkomponente 51 führt, an einem Einlass des Gehäuses der zweiten Hydraulikpumpe 70 und an einem Einlass des Gehäuses des zweiten Hydraulikmotors 69 angeschlossen. Ausgehend von dem Gehäuse des zweiten Hydraulikmotors 69 und der zweiten Hydraulikpumpe 70 führt eine Tankleitung 55 unmittelbar zu dem Tank 45 der Erntemaschine 1. An dem Tank 45 ist eine Hydraulikpumpe 91 angeschlossen, die die in dem Tank 45 befindliche Hydraulikflüssigkeit zum Kühlen zu einem stromabwärts der Hydraulikpumpe 91 befindlichen Kühler 90 befördert. Stromabwärts des Kühlers 90 wird die Hydraulikflüssigkeit erneut dem Tank 45 zugeführt.

Weiterhin unterscheidet sich das in Fig. 3 dargestellte Ausführungsbeispiel von dem in Fig. 2 dargestellten Ausführungsbeispiel dadurch, dass der Spülölvolumenstrom 53 einem nicht näher dargestellten Gehäuse der dritten Hydraulikpumpe 81 und einem Gehäuse des dritten Hydraulikmotors 80 des dritten hydraulischen Kreislaufs 79 zugeführt wird. Hierfür ist die Leitung 64, die von dem in der Bypassleitung 52 integrierten Mengenteiler 60 hin zu der zweiten Hydrauliksystemkomponente 65 führt, an einem Einlass des Gehäuses der dritten Hydraulikpumpe 81 und an einem Einlass des Gehäuses des dritten Hydraulikmotors 80 angeschlossen. Ausgehend von dem Gehäuse des dritten Hydraulikmotors 80 und der dritten Hydraulikpumpe 81 führt eine Tankleitung 55 unmittelbar zu dem Tank 45 der Erntemaschine 1.

Zusätzlich führt in dem in Fig. 3 dargestellten Ausführungsbeispiel eine Leitung 92 ausgehend von der an der Erntemaschine 1 angeordneten Füllpumpe 40 unmittelbar zu dem zweiten hydraulischen Kreislauf 68 und ist an die Zuführleitung 67 des zweiten hydraulischen Kreislaufs 68 angeschlossen. Die Leitung 92 ist ebenfalls mit der Zuführleitung des dritten hydraulischen Kreislaufs 79 verbunden. Mithin ist mittels der Leitung 92 ein zusätzlicher Volumenstrom der ersten Hydrauliksystemkomponente 51 als auch der zweiten Hydrauliksystemkomponente 65 zuführbar.

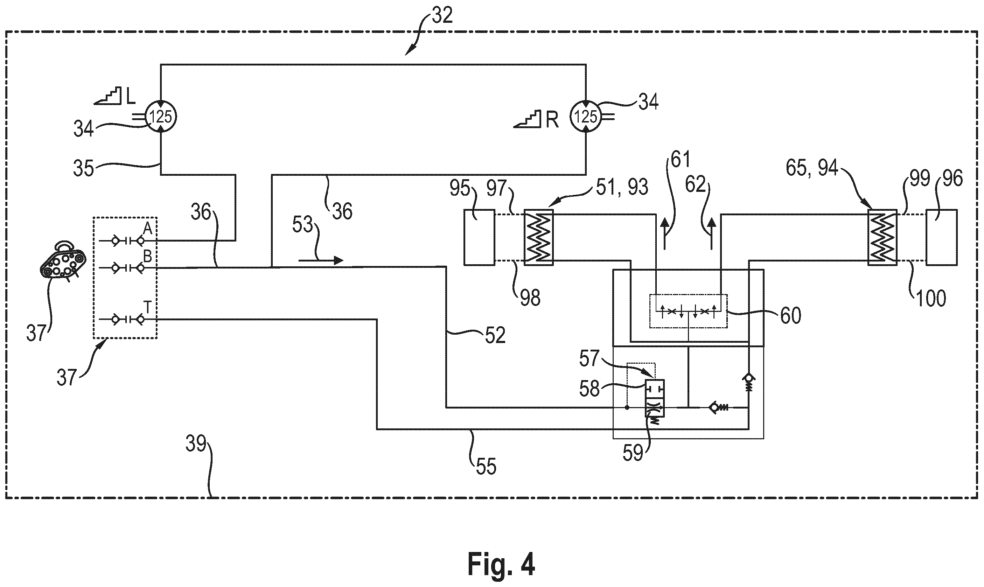

In Fig. 4 ist ein weiteres Ausführungsbeispiel offenbart. Die Darstellung gemäß Fig. 4 zeigt lediglich die Vorsatzgerätseite 39. Die Versorgungsleitung 35 und Rückführleitung 36 bilden einen Teil des in den Fig. 2 bis 3 im Detail dargestellten ersten hydraulischen Kreislaufs 32 und sind an den Anschlussstellen A und B mit der Erntemaschinenseite 38 des ersten hydraulischen Kreislaufs 32 verbunden. Die Vorsatzgerätseite 39 des ersten hydraulischen Kreislaufs 32 unterscheidet sich von der in den Fig. 2 und 3 dargestellten Vorsatzgerätseite 39 des ersten hydraulischen Kreislaufs 32 dadurch, dass zwei erste Hydraulikmotoren 34 in den ersten hydraulischen Kreislauf 32 eingebunden sind, die von der Versorgungsleitung 35 mit Hydraulikflüssigkeit beaufschlagt werden. An die Rückführleitung 36, die die Hydraulikflüssigkeit zurück zu der ersten Hydraulikpumpe 33 leitet, ist eine Bypassleitung 52 angeschlossen. In die Bypassleitung 52 ist das als Druckkontrollelement 57 ausgebildete Wegeventil mit den Schaltstellungen 58, 59 integriert. Dem Druckkontrollelement 57 ist stromabwärts der Mengenteiler 60 nachgeordnet. Der Mengenteiler 60 teilt den aus dem ersten hydraulischen Kreislauf 32 entnommenen Spülölvolumenstrom 53 in die Teilströme 61, 62 auf, wobei der erste Teilstrom 61 der ersten Hydrauliksystemkomponente 51 zugeführt wird und der zweite Teilstrom 62 der zweiten Hydrauliksystemkomponente 65 zugeführt wird. Stromabwärts von den Hydrauliksystemkomponenten 51, 65 werden die Teilströme 61, 62 mittels einer Tankleitung 55 dem an der Erntemaschine 1 angeordneten Tank 45 zugeführt.

Gemäß der in Fig. 4 dargestellten Ausführungsform sind die erste Hydrauliksystemkomponente 51 und die zweite Hydrauliksystemkomponente 65 jeweils als ein Wärmetauscher 93, 94 ausgebildet. Die Wärmetauscher 93, 94 sind jeweils dazu vorgesehen und eingerichtet das Getriebeöl eines jeweiligen am Vorsatzgerät 3 angeordneten Getriebes 95, 96 zu kühlen. Hierfür ist der jeweilige Wärmetauscher 93, 94 jeweils mittels Leitungen 97, 98, 99, 100 mit dem jeweiligen Getriebe 95, 96 gekoppelt, wobei das über die Leitungen 97, 98, 99, 100 dem jeweiligen Wärmetauscher 93, 94 zugeführte Getriebeöl mittels des dem jeweiligen Wärmetauscher 93, 94 zugeführten jeweiligen Teilstroms 61, 62 gekühlt wird.

**Bezugszeichenliste:**

| | | | |
|---|---|---|---|
| 1 | Selbstfahrende Erntemaschine | 36 | Rückführleitung |
| 2 | Maschinengehäuse | 37 | Schnellkupplung |
| 3 | Vorsatzgerät | 38 | Erntemaschinenseite |
| 4 | Erntegut | 39 | Vorsatzgerätseite |
| 5 | Schrägförderer | 40 | Füllpumpe |
| 6 | Dreschvorrichtung | 41 | Reservoir |
| 7 | Abscheideeinrichtung | 42 | Leitung |
| 8 | Siebanordnung | 43 | Druckbegrenzungsventil |
| 9 | Dreschtrommel | 44 | Filter |
| 10 | Dreschkorb | 45 | Tank |
| 11 | Teilstrom | 46 | Leitung |
| 12 | Teilstrom | 47 | Leitung |
| 13 | Vorbereitungsboden | 48 | Druckbegrenzungsventil |
| 14 | Obersieb | 49 | Druckbegrenzungsventil |
| 15 | Untersieb | 50 | Spülventil |
| 16 | Reinigungsgebläse | 51 | Erste Hydrauliksystemkomponente |
| 17 | Zuführtrommel | 52 | Bypassleitung |
| 18 | Körnerstrom | 53 | Spülölvolumenstrom |
| 19 | Rücklaufboden | 54 | Auslass |
| 20 | Auffang- und Führungsboden | 55 | Tankleitung |
| 21 | Kornförderschnecke | 56 | Ausspülkontrollelement |
| 22 | Elevator | 57 | Druckkontrollelement |
| 23 | Korntank | 58 | Schaltstellung |
| 24 | Haspel | 59 | Schaltstellung |
| 25 | Arme | 60 | Mengenteiler |
| 26 | Rahmen | 61 | Teilstrom |
| 27 | Erntegutförderorgan | 62 | Teilstrom |
| 28 | Schneidorgan | 63 | Leitung |
| 29 | Querförderschnecke | 64 | Leitung |
| 30 | Messerbalken | 65 | Zweite Hydrauliksystemkomponente |
| 31 | Arbeitsaggregat | 66 | Auslass |
| 32 | Erster hydraulischer Kreislauf | 67 | Leitung |
| 33 | Erste Hydraulikpumpe | 68 | Zweiter hydraulischer Kreislauf |
| 34 | Erster Hydraulikmotor | 69 | Zweiter Hydraulikmotor |
| 35 | Versorgungsleitung | 70 | Zweite Hydraulikpumpe |
| 71 | Leitung | 92 | Leitung |
| 72 | Leitung | 93 | Erster Wärmetauscher |
| 73 | Druckbegrenzungsventil | 94 | Zweiter Wärmetauscher |
| 74 | Druckbegrenzungsventil | 95 | Getriebe |
| 75 | Spülventil | 96 | Getriebe |
| 76 | Zuführleitung | 97 | Leitung |
| 77 | Rückschlagventil | 98 | Leitung |
| 78 | Rückschlagventil | 99 | Leitung |
| 79 | Dritter hydraulischer Kreislauf | 100 | Leitung |
| 80 | Dritter Hydraulikmotor | | |
| 81 | Dritte Hydraulikpumpe | | |
| 82 | Leitung | | |
| 83 | Leitung | | |
| 84 | Druckbegrenzungsventil | | |
| 85 | Druckbegrenzungsventil | | |
| 86 | Zuführleitung | | |
| 87 | Rückschlagventil | | |
| 88 | Rückschlagventil | | |
| 89 | Spülventil | | |
| 90 | Kühler | | |
| 91 | Hydraulikpumpe | | |

## Patentansprüche

1. Selbstfahrende Erntemaschine (1) mit einem Vorsatzgerät (3) zur Aufnahme von Pflanzen umfassend einen ersten hydraulisches Kreislauf (32), der zumindest einen an dem Vorsatzgerät (3) angeordneten ersten Hydraulikmotor (34) zum Antreiben eines Arbeitsaggregats (31) umfasst und eine an der Erntemaschine (1) angeordnete erste Hydraulikpumpe (33), wobei die erste Hydraulikpumpe (33) und der erste Hydraulikmotor (34) mit einer Versorgungsleitung (35) und einer Rückführleitung (36) miteinander verbunden sind,
**dadurch gekennzeichnet, dass**
das Vorsatzgerät (3) zumindest eine erste Hydrauliksystemkomponente (51) umfasst, die zum Zuführen eines Spülölvolumenstroms (53) von dem ersten hydraulischen Kreislauf (32) zu der ersten Hydrauliksystemkomponente (51) mittels einer Bypassleitung (52) mit der Rückführleitung (36) gekoppelt ist.

2. Selbstfahrende Erntemaschine (1) nach Anspruch 1, **dadurch gekennzeichnet, dass** die Erntemaschine (1) einen Tank (45) umfasst, wobei die erste Hydrauliksystemkomponente (51) zum Zuführen des Spülölvolumenstroms (53) zu dem Tank (45) an einem Auslass (54) mit einer zu dem Tank (45) führenden Tankleitung (55) verbunden ist.

3. Selbstfahrende Erntemaschine (1) nach Anspruch 2, **dadurch gekennzeichnet, dass** in die Tankleitung (55) ein Ausspülkontrollelement (56) zur Begrenzung des dem Tank (45) zuzuführenden Spülölvolumenstroms (53) integriert ist, wobei vorzugsweise das Ausspülkontrollelement (56) als eine Blende oder ein Proportionalventil ausgeführt ist.

4. Selbstfahrende Erntemaschine (1) nach einem der Ansprüche 1 bis 3, **dadurch gekennzeichnet, dass** die Bypassleitung (52) ein Druckkontrollelement (57) umfasst, wobei das Druckkontrollelement (57) vorzugsweise als ein Wegeventil mit zumindest zwei Schaltstellungen (58, 59) ausgeführt ist, wobei vorzugsweise in einer ersten Schaltstellung (59) des Wegeventils eine Drossel eine Druckminderung bewirkt und in einer zweiten Schaltstellung (58) des Wegeventils die Bypassleitung (52) gesperrt ist.

5. Selbstfahrende Erntemaschine (1) nach einem der Ansprüche 1 bis 4, **dadurch gekennzeichnet, dass** das Vorsatzgerät (3) eine zweite Hydrauliksystemkomponente (65) umfasst, die zum Zuführen zumindest eines Teilstroms (62) des Spülölvolumenstroms (53) von dem ersten hydraulischen Kreislauf (32) zu der zweiten Hydrauliksystemkomponente (65) mittels der Bypassleitung (52) mit der Rückführleitung (36) gekoppelt ist.

6. Selbstfahrende Erntemaschine (1) nach Anspruch 5, **dadurch gekennzeichnet, dass** die zweite Hydrauliksystemkomponente (65) an einem Auslass (66) mit der Tankleitung (55), insbesondere mit dem Ausspülkontrollelement (56) gekoppelt ist.

7. Selbstfahrende Erntemaschine (1) nach einem der Ansprüche 5 bis 6, **dadurch gekennzeichnet, dass** die Bypassleitung (52) einen Mengenteiler (60) umfasst, der dazu vorgesehen und eingerichtet ist den Spülölvolumenstrom (53) in zumindest zwei Teilströme (61, 62) aufzuteilen und zumindest zwei separaten Leitungen (63, 64) zuzuführen, wobei die erste Leitung (63) mit der ersten Hydrauliksystemkomponente (51) verbunden ist und die zweite Leitung (64) mit der zweiten Hydrauliksystemkomponente (65) verbunden ist.

8. Selbstfahrende Erntemaschine (1) nach einem der Ansprüche 1 bis 7, **dadurch gekennzeichnet, dass** die erste Hydrauliksystemkomponente (51) als ein erster Wärmetauscher (93) ausgebildet ist und/oder die zweite Hydrauliksystemkomponenten (65) als ein zweiter Wärmetauscher (94) ausgebildet ist.

9. Selbstfahrende Erntemaschine (1) nach Anspruch 8, **dadurch gekennzeichnet, dass** das Vorsatzgerät (3) zumindest ein Getriebe (95, 96) mit in dem zumindest einen Getriebe (95, 96) befindlichen Getriebeöl umfasst, wobei der erste und/oder der zweite Wärmetauscher (93, 94) zum Kühlen des Getriebeöls mit dem zumindest einen Getriebe (95, 96) gekoppelt ist.

10. Selbstfahrende Erntemaschine (1) nach einem der Ansprüche 1 bis 7, **dadurch gekennzeichnet, dass** die erste Hydrauliksystemkomponente (51) einen zweiten hydraulischen Kreislauf (68) umfasst, wobei der zweite hydraulische Kreislauf (68) zumindest einen zweiten Hydraulikmotor (69) und eine zweite Hydraulikpumpe (70) umfasst, die mittels Leitungen (71, 72) miteinander verbunden sind, wobei vorzugsweise der zweite Hydraulikmotor (69) trieblich mit einem Erntegutförderorgan (27) oder einem Schneidorgan (28) verbunden ist.

11. Selbstfahrende Erntemaschine (1) nach Anspruch 10, **dadurch gekennzeichnet, dass** die Bypassleitung (52) mit einem Gehäuse des zweiten Hydraulikmotors (69) und/oder einem Gehäuse der zweiten Hydraulikpumpe (70) und/oder zumindest einer der den zweiten Hydraulikmotor (69) und die zweite Hydraulikpumpe (70) verbindenden Leitungen (71, 72) gekoppelt ist.

12. Selbstfahrende Erntemaschine (1) nach einem der Ansprüche 5 bis 7, **dadurch gekennzeichnet, dass** die zweite Hydrauliksystemkomponente (65) einen dritten hydraulischen Kreislauf (79) umfasst, wobei der dritte hydraulische Kreislauf (79) zumindest einen dritten Hydraulikmotor (80) und eine dritte Hydraulikpumpe (81) umfasst, die mittels Leitungen (82, 83) miteinander verbunden sind, wobei vorzugsweise der dritte Hydraulikmotor (80) trieblich mit einem Erntegutförderorgan (27) oder einem Schneidorgan (28) verbunden ist.

13. Selbstfahrende Erntemaschine (1) nach Anspruch 12, **dadurch gekennzeichnet, dass** die Bypassleitung (52) mit einem Gehäuse des dritten Hydraulikmotors (80) und/oder einem Gehäuse der dritten Hydraulikpumpe (81) und/oder zumindest einer der den dritten Hydraulikmotor (80) und die dritte Hydraulikpumpe (81) verbindenden Leitungen (82, 83) gekoppelt ist.

14. Selbstfahrende Erntemaschine (1) nach einem der Ansprüche 2 bis 13, **dadurch gekennzeichnet, dass** die Erntemaschine (1) einen Kühler (90) umfasst, wobei der Kühler (90) an die Tankleitung (55) angeschlossen ist und zum Kühlen des dem Tank (45) zuzuführenden Spülölvolumenstroms (53) vorgesehen und eingerichtet ist.

15. Selbstfahrende Erntemaschine (1) nach einem der Ansprüche 1 bis 14, **dadurch gekennzeichnet, dass** das Vorsatzgerät (3) eine Haspel (24) umfasst, wobei der erste Hydraulikmotor (34) trieblich mit der Haspel (24) verbunden ist.
